# EUROPÄISCHE PATENTSCHRIFT

(11) **EP 1 597 872 B1**
(45) Veröffentlichungstag und Bekanntmachung des Hinweises auf die Patenterteilung: **26.07.2006**
(21) Anmeldenummer: 03727159.0
(22) Anmeldetag: 31.03.2003
(51) Int. Cl.: H04L 12/56

(54) **VERFAHREN UND NETZKNOTEN ZUR ERMITTLUNG VON MULTIPATH-ÜBERTRAGUNGSWEGEN IN EINEM PAKETVERMITTELNDEN KOMMUNIKATIONSNETZ**
METHOD AND NETWORK NODE FOR DETERMINING MULTI-PATH TRANSMISSION PATHS IN A PACKET-SWITCHED COMMUNICATION NETWORK
PROCEDE ET NOEUDS DE RESEAU POUR DETERMINER DES VOIES DE TRANSMISSION PAR TRAJETS MULTIPLES DANS UN RESEAU DE COMMUNICATION A COMMUTATION PAR PAQUETS

(30) Priorität: 27.02.2003 DE 10308615
(43) Veröffentlichungstag der Anmeldung: 23.11.2005
(73) Patentinhaber: SIEMENS AKTIENGESELLSCHAFT, 80333 München (DE)
(72) Erfinder: WINKLER, Christian, 80339 München (DE); SCHOLLMEIER, Gero, 82131 Gauting (DE)
(86) Internationale Anmeldenummer: PCT/DE2003/001049
(87) Internationale Veröffentlichungsnummer: WO 2004/077755

(56) Entgegenhaltungen:
- US-A1- 2002 067 720
- US-B1- 6 347 078
- ZAUMEN W T ET AL: "Loop-free multipath routing using generalized diffusing computations" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, 29. März 1998 (1998-03-29), Seiten 1408-1417, XP010270363 ISBN: 0-7803-4383-2
- ISHIDA K: "Multiple node-disjoint path protocol for virtual paths in ATM networks" PARALLEL AND DISTRIBUTED REAL-TIME SYSTEMS, 1997. PROCEEDINGS OF THE JOINT WORKSHOP ON GENEVA, SWITZERLAND 1-3 APRIL 1997, LOS ALAMITOS, CA, USA,IEEE COMPUT. SOC, US, 1. April 1997 (1997-04-01), Seiten 91-97, XP010258195 ISBN: 0-8186-8096-2

## Beschreibung

Die Erfindung betrifft ein Verfahren gemäß dem Oberbegriff des Anspruchs 1 und einen Netzknoten nach Anspruch 8.

Um Datenpakete in einem paketvermittelnden Kommunikationsnetz, wie einem paketvermittelnden Datennetz, das beispielsweise nach dem Internet Protokoll, kurz IP, betrieben wird, von einem Eingangs-Netzknoten zu einem Ziel-Netzknoten zu übermitteln, sind verschiedene Weiterleitungs-, respektive Routing-Verfahren bekannt. Eine Gruppe von Weiterleitungs- bzw. Routing-Verfahren sind Mehrwege- respektive Multipath-Routing-Verfahren. Beim Multipath-Routing werden die Datenpakete nicht über einen Weg bzw. Übertragungsweg respektive Routing-Weg, sondern über verschiedene Übertragungswege übertragen.

Für jedes Eingangs- zu Zielnetzknotenpaar ergibt sich beim Multipath-Routing eine Menge an Übertragungswegen bzw. Routing-Wegen, die auch als Hammock bezeichnet wird.

Die Summe der Übertragungswege von allen Eingangs-Netzknoten zu einem Ausgangs-Netzknoten wird dabei als Hammock-Set bezeichnet. Für jeden Ausgangs-Netzknoten gibt es demnach ein Hammock-Set.

Die Übertragungswege bzw. die Menge der Übertragungswege von einem Eingangs- zu einem Zielnetzknoten müssen in sich schleifenfrei sein, um kreisende Datenpakete zu vermeiden. D.h. die Hammocks müssen schleifenfrei sein.

Da das Multipath-Routing rein zielbasiert arbeitet, d.h., dass die Weiterleitung eines Datenpakets an Hand seiner Zielkennung bzw. Zieladresse erfolgt, muss auch für jeden Ausgangs-Netzknoten das jeweilige Hammock-Set schleifenfrei sein.

Durch das Multipath- respektive Mehrwege-Routing wird eine höhere Zuverlässigkeit bei der Übertragung von Datenpaketen erreicht. Je mehr Wege von einem Eingangs-Netzknoten zu einem Ziel-Netzknoten verfügbar sind, desto höher ist die Übertragungssicherheit. Ist ein Übertragungsweg gestört, stehen genügend Alternativwege zur Übertragung zur Verfügung. Das gilt natürlich nur, wenn der Alternativweg nicht über den gestörten Netzknoten bzw. Weg verläuft.

Bisherige Berechnungen von Wegemengen bzw. Hammocks nach dem Kriterium Schleifenfreiheit, das notwendig ist bei der Paketvermittlung nach Ziel-Kennungen bzw. Ziel-Adressen, haben gezeigt, dass in vielen Fällen die Disjunktheit nicht erreicht wird.

Aufgabe der vorliegenden Erfindung ist es, die Ermittlung und Auswahl von Multipath-Übertragungswegen in paketvermittelnden Kommunikationsnetzen zu verbessern.

Diese Aufgabe wird durch die Merkmale des Verfahrens gemäß Anspruch 1 gelöst.

Der Vorteil des Verfahrnes besteht darin; dass disjunkte, schleifenfreie Multipath-Übertragungswege ermittelt werden.

Vorteilhafte Ausgestaltungen der Erfindung sind in den Unteransprüchen angegeben.

In einer Ausgestaltung der Erfindung werden die Verfahrensschritte wiederholt und auf zwischenliegende Netzknoten angewendet. Dies hat den Vorteil, das ein eng vermaschter, disjunkter, weitgehend schleifenfreier Hammock entsteht.

Erfindungsgemäß wird vorgeschlagen, dass zuerst mindestens zwei disjunkte Übertragungswege zwischen Eingangs- und Zielnetzknoten mit Hilfe bekannter Shortest Path bzw. Multipath Algorithmen ermittelt werden, beispielsweise mit dem Dijkstra Algorithmus, der beim Open Shortest Path First Verfahren, kurz OSPF, angewendet wird, mit dem Bellmann-Ford Algorithmus, sowie mit Disjoined Path Algorithmen oder anderen Algorithmen bzw. graphentheoretischen Verfahren.

Dann werden die in diesen beiden disjunkten Pfaden enthaltenen Netzknoten zum Teil, idealerweise möglichst vollständig, direkt miteinander in Richtung Ziel-Netzknoten verbunden bzw. entsprechende Übertragungswege eingerichtet, so dass sich, bezogen auf einen Netzknoten eines disjunkten Übertragungsweges, jeweils mindestens zwei Wege in Richtung Ziel-Netzknoten ergeben. Die Richtung des Übertragungsweges bzw. der Verbindung in Richtung Ziel-Netzknoten ist erforderlich, um Routing-Schleifen zu vermeiden. Dabei kann auch eine Sonderbehandlung mancher Querwege nötig sein, beispielsweise mit dem "Joker-Link" Verfahren gemäß einer älteren Patentanmeldung.

In einem dritten Schritt werden zwischen den verbleibenden Netzknoten der disjunkten Übertragungswege bzw. Pfade, d.h. für Netzknoten, die noch keinen zweiten Weg in Richtung Ziel-Netzknoten aufweisen, weitere, über andere Netzknoten führende Übertragungswege in Richtung Ziel-Netzknoten eingerichtet. D.h. die Netzknoten der disjunkten Übertragungswege werden mit Netzknoten des anderen oder gleichen disjunkten Pfades durch Übertragungswege verbunden, die über einen oder mehrere andere Netzknoten führen.

In analoger Weise ist dabei gegebenenfalls die Schleifenfreiheit zu berücksichtigen.

Entstehen durch den dritten Schritt weitere Netzknoten, die nur einen Weg in Richtung Ziel-Netzknoten aufweisen, können diese gemäß dem zweiten und/oder dritten Schritt und deren fortlaufender Wiederholung, in Netzknoten mit mindestens zwei Übertragungswegen in Richtung Ziel-Netzknoten überführt werden.

Alternativ kann nach Anwendung des zweiten und dritten Schrittes die Netz-Topologie derart ergänzt werden, dass, so weit möglich, für verbleibende Netzknoten, die beispielsweise nur einen Übertragungsweg in Richtung Ziel-Netzknoten aufweisen, weitere Übertragungswege in Richtung Ziel-Netzknoten eingerichtet werden.

Wird ein zielbasiertes Routing unter Berücksichtigung der Absenderkennung bzw. Absenderadresse der Datenpakete oder unter Berücksichtung des Datenpaket-Empfangs-Verbindungsweges durchgeführt, ist die erwähnte Sonderbehandlung bei Routing-Schleifen nicht erforderlich. Die Schleifenfreiheit kann durch die Berücksichtigung der Absenderkennung oder des Empfangs-Verbindungsweges des Datenpaketes realisiert werden. Dabei sendet ein Netzknoten ein Datenpaket nur über einen be= stimmten Verbindungsweg zu einem Ziel-Netzknoten, wenn dieser Verbindungsweg zusätzlich für eine oder mehrere Absenderkennungen zugelassen ist oder das Datenpaket vom Netzknoten auf einem oder mehreren bestimmten Verbindungswegen empfangen wurde. D.h., dass Datenpakete für den gleichen Ziel-Netzknoten in Abhängigkeit von ihrer Absenderadresse oder dem Empfangs-Verbindungsweg des Netzknoten über verschiedene Verbindungswege weitergeleitet werden.

Das Verfahren kann fallweise so verwendet werden, dass maximal zwei drei, vier oder mehr disjunkte Übertragungswege zwischen Eingangs- und Zielnetzknoten ermittelt werden. Beim zweiten Schritt können die Netzknoten eines disjunkten Übertragungsweges zwei, drei, vier oder mehr Wege in Richtung Zielnetzknoten ermitteln, so dass sich jeweils zwei, drei, vier oder mehr Wege in Richtung Ziel-Netzknoten ergeben. Dies kann in analoger Weise für den dritten Schritt erfolgen.

Ein Ausführungsbeispiel der Erfindung ist in der Zeichnung dargestellt und wird im folgenden beschrieben.

Dabei zeigt:
Figur 1 ein schematisches Kommunikationsnetz zur Erläuterung des erfindungsgemäßen Verfahrens in einem ersten Verfahrensschritt.
Figur 2 eine Anordnung nach Figur 1 in einem zweiten Verfahrensschritt.
Figur 3 eine Anordnung nach Figur 2 in einem dritten Verfahrensschritt.

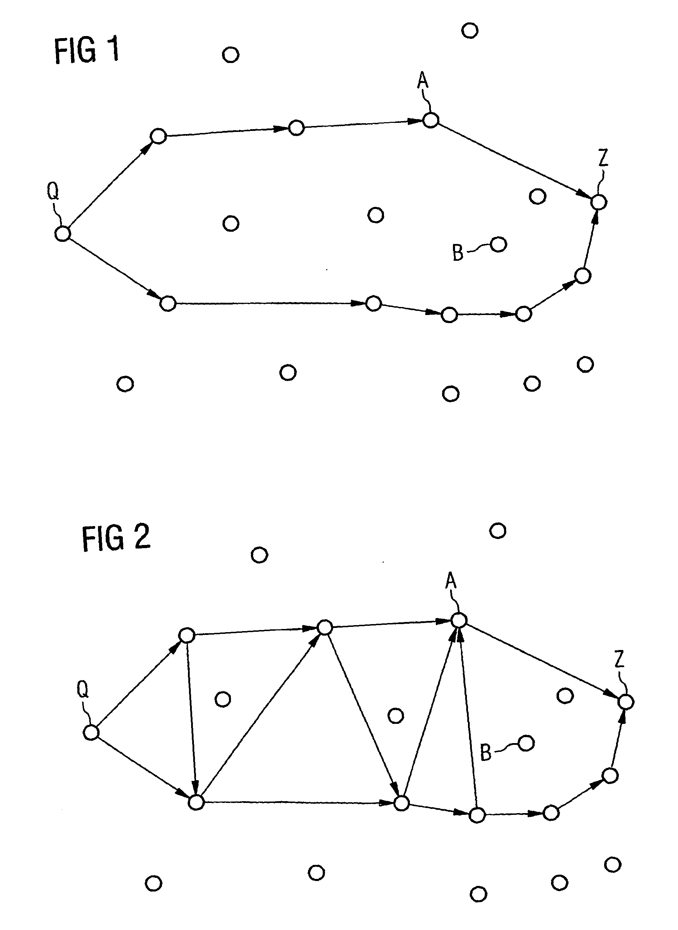

Figur 1 zeigt ein schematisches Kommunikationsnetz, das aus mehren Netzknoten besteht, die als Kreise dargestellt sind und durch nicht dargestellte Verbindungswege bzw. Links zumindest teilweise miteinander verbunden sind.

Im ersten Verfahrensschritt werden von einem Eingangs-Netzknoten Q zu einem Ausgangsnetzknoten Z zwei oder mehr disjunkte bzw. unabhängige Übertragungswege ermittelt. Diese sind jeweils durch Pfeile zwischen den Netzknoten, ausgehend vom Eingangs-Netzknoten Q in Richtung Ziel-Netzknoten Z, dargestellt.

Im zweiten Verfahrensschritt werden zwischen den Netzknoten der beiden disjunkten Übertragungswege weitere direkte Übertragungswege in Richtung Ziel-Netzknoten Z eingerichtet, wie dies in Figur 2 durch weitere Pfeile zwischen den Netzknoten der disjunkten Übertragungswege gezeigt ist.

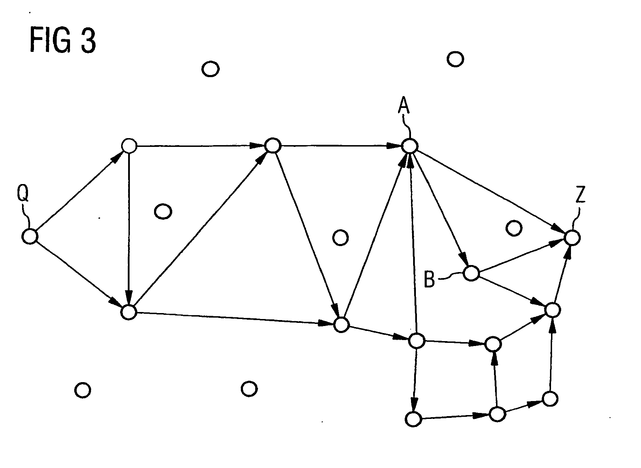

Im dritten Verfahrensschritt werden Netzknoten der disjunkten Übertragungswege durch Übertragungswege, die über weitere Netzknoten führen, miteinander verbunden. Dies ist in Figur 3 beispielhaft durch weitere Pfeile zwischen den Netzknoten dargestellt. Beispielsweise hat ein Netzknoten A eines disjunkten Übertragungsweges einen direkten Übertragungsweg zum Ziel-Netzknoten Z und einen zweiten Übertragungsweg über einen Netzknoten B, der nicht im disjunkten Übertragungsweg enthalten ist, zu Ziel-Netzknoten Z.

Das Verfahren kann vorteilhaft für die Sprachübertragung in Datennetzen eingesetzt werden, wie beispielsweise für Voice over IP, kurz VoIP, oder für andere Sprachübertragungsverfahren oder Protokolle. Das Verfahren ermöglicht eine höhere Zuverlässigkeit bzw. Ausfallsicherheit bei der Übertragung von Sprachdaten bzw. Sprach-Datenpaketen in Kommunikations- bzw. Datennetzen.

Durch die enge Vermaschung und die disjunkten Übertragungswege wird eine hohe Ausfallsicherheit für die Sprachübertragung in quasi Echtzeit erreicht.

## Patentansprüche

1. Verfahren zur Ermittlung von Multipath-Übertragungswegen zwischen einem Eingangs-Netzknoten und einem Ziel-Netzknoten in einem mehrere Netzknoten aufweisenden, paketvermittelnden Kommunikationsnetz, in dem jeweils Datenpakete über verschiedene, die Netzknoten verbindende, Verbindungswege übermittelt werden,
**dadurch gekennzeichnet, dass**
a) mindestens zwei disjunkte Übertragungswege zwischen Eingangs- und Zielnetzknoten ermittelt werden,
b) zwischen den in diesen disjunkten übertragungswegen enthaltenen Netzknoten teilweise direkte Übertragungswege in Richtung Ziel-Netzknoten eingerichtet werden derart, dass sich von einem Netzknoten eines disjunkten Übertragungsweges jeweils mindestens zwei Wege in Richtung Ziel-Netzknoten ergeben,
c) zwischen den Netzknoten der disjunkten Übertragungswege, die gemäß b) keine zwei Wege in Richtung Ziel-Netzknoten aufweisen, zumindest teilweise weitere, über andere Netzknoten führende Übertragungswege in Richtung Ziel-Netzknoten eingerichtet werden.

2. Verfahren nach Anspruch 1,
**dadurch gekennzeichnet,**
**dass** genau zwei disjunkte Übertragungswege zwischen Eingangs- und Zielnetzknoten ermittelt werden und
**dass** sich von einem Netzknoten eines disjunkten Übertragungsweges zumindest teilweise jeweils zwei Wege in Richtung Ziel-Netzknoten ergeben.

3. Verfahren nach Anspruch 1 oder 2,
**dadurch gekennzeichnet,**
**dass** die Verfahrensschritte mit den gemäß Punkt b) und c) genannten Merkmalen wiederholt werden.

4. Verfahren nach Anspruch 1 oder 2,
**dadurch gekennzeichnet,**
**dass** gemäß Punkt c) von Netzknoten, der über weitere Netzknoten führenden Übertragungswege, analog zum Punkt b) Übertragungswege mit anderen in Richtung Ziel-Netzknoten liegenden Netzknoten eingerichtet werden.

5. Verfahren nach Anspruch 4,
**dadurch gekennzeichnet,**
**dass** nach Anspruch 4 verbleibende Netzknoten gemäß Anspruch 1 oder 2 Punkt c) behandelt werden.

6. Verfahren nach Anspruch 5,
**dadurch gekennzeichnet,**
**dass** die Verfahrensschritte gemäß den in den Ansprüchen 1, 2, 4 oder 5 angegebenen Merkmalen wiederholt werden.

7. Verfahren nach einem der vorhergehenden Ansprüche,
**dadurch gekennzeichnet,**
**dass** als paketvermittelndes Kommunikationsnetz ein nach dem Internet Protokoll betriebenes Netz verwendet wird.

8. Netzknoten, mit Mitteln zur Durchführung der Schritte eines Verfahrens nach einem der vorhergehende Ansprüche.

## Claims

1. Method for determining multipath transmission paths between an input network node and a target network node in a packet switching communication network comprising a number of network nodes in which data packets are respectively transmitted via different connecting paths linking the network nodes,
**characterised in that**
a) at least two disjunct transmission paths are determined between input and target network nodes,
b) direct transmission paths in the direction of the target network nodes are partially setup between the network nodes contained in these disjunct transmission paths such that at least two paths are respectively created from a network node of a disjunct transmission path in the direction of the target network node.
c) further transmission paths leading via other network nodes in the direction of the target network node are at least partially setup between the network nodes of those disjunct transmission paths which in accordance with b) do not have two paths running in the direction of the target network node.

2. Method according to claim 1
**characterised in that**
precisely two disjunct transmission paths are determined between the input and target network nodes and
that at least two paths are partially created from a network node of a disjunct transmission path in the direction of the target network nodes.

3. Method according to claim 1 or 2,
**characterised in that**
the method steps with the features stated in item b) and c) are repeated.

4. Method according to claim 1 or 2,
**characterised in that**
in accordance with item c) transmission paths are set up to other network nodes located in the direction of the target network nodes, analogously to point b) from network nodes of transmission paths leading via other network nodes

5. Method according to claim 4
**characterised in that**
in accordance with claim 4, remaining network nodes are dealt with in accordance with claim 1 or 2 item c).

6. Method according to claim 5
**characterised in that**
the process steps are repeated in accordance with the features stated in claims 1, 2, 4 or 5.

7. Method according to one of the preceding claims
**characterised in that**
a network operated in accordance with the Internet Protocol is employed as a packet-switching communication network.

8. Network node with means for implementing the step of a method according to one of the preceding claims.

## Revendications

1. Procédé pour déterminer des voies de transmission par trajets multiples entre un noeud de réseau d'entrée et un noeud de réseau cible dans un réseau de communication par commutation de paquets, présentant plusieurs noeuds de réseau, dans lequel réseau de communication des paquets de données sont respectivement transmis par l'intermédiaire de différentes voies de liaison raccordant les noeuds de réseau,
**caractérisé en ce que**
a) au moins deux voies de transmission disjointes sont déterminées entre le noeud de réseau d'entrée et le noeud de réseau cible,
b) entre les noeuds de réseau contenus dans ces voies de transmission disjointes, des voies de transmission en partie directes sont configurées en direction du noeud de réseau cible de telle manière qu'à partir d'un noeud de réseau d'une voie de transmission disjointe, il résulte respectivement au moins deux voies en direction du noeud de réseau cible,
c) entre les noeuds de réseau des voies de transmission disjointes, qui selon b) ne présentent pas deux voies en direction du noeud de réseau cible, d'autres voies de transmission conductrices par l'intermédiaire d'autres noeuds de réseau sont configurées, au moins en partie, en direction du noeud de réseau cible.

2. Procédé selon la revendication 1,
**caractérisé en ce que**
exactement deux voies de transmission disjointes sont déterminées entre le noeud de réseau d'entrée et le noeud de réseau cible et
respectivement deux voies de transmission en direction du noeud de réseau cible résultent, tout du moins en partie, d'un noeud de réseau d'une voie de transmission disjointe.

3. Procédé selon la revendication 1 ou 2,
**caractérisé en ce que**
les étapes du procédé sont répétées avec les caractéristiques mentionnées aux points b) et c).

4. Procédé selon la revendication 1 ou 2,
**caractérisé en ce que**
à partir de noeuds de réseau des chemins de transmission menant par d'autres noeuds de réseau selon le point c), sont configurés selon point b) des chemins de transmission avec d'autres noeuds de réseau en direction noeuds de réseau cible.

5. Procédé selon la revendication 4,
**caractérisé en ce que**
les noeuds de réseau restant selon la revendication 4 sont traités selon la revendication 1 ou 2 ,point c).

6. Procédé selon la revendication 5,
**caractérisé en ce que**
les étapes du procédé sont répétées selon les caractéristiques indiquées dans les revendications 1, 2, 4 ou 5.

7. Procédé selon l'une quelconque des revendications précédentes,
**caractérisé en ce que**
un réseau opéré selon le protocole Internet est utilisé comme réseau de communication par commutation de paquets.

8. Noeud de réseau comprenant des moyens pour l'exécution des étapes selon l'une quelconque des revendications précédentes.
